(19) Europäisches Patentamt / European Patent Office / Office européen des brevets

(11) **EP 4 579 797 A1**

(12) **EUROPEAN PATENT APPLICATION**
published in accordance with Art. 153(4) EPC

(43) Date of publication:
**02.07.2025 Bulletin 2025/27**

(21) Application number: **22960224.8**

(22) Date of filing: **30.09.2022**

(51) International Patent Classification (IPC):
*H01M 4/36* (2006.01)   *H01M 4/133* (2010.01)

(52) Cooperative Patent Classification (CPC):
**H01M 4/133; H01M 4/36;** Y02E 60/10

(86) International application number:
**PCT/CN2022/123058**

(87) International publication number:
**WO 2024/065596 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• YAN, Yi
**Ningde, Fujian 352100 (CN)**
• DONG, Jiali
**Ningde, Fujian 352100 (CN)**
• XIE, Yuansen
**Ningde, Fujian 352100 (CN)**

(74) Representative: **Icosa
83 avenue Denfert-Rochereau
75014 Paris (FR)**

(54) **NEGATIVE ELECTRODE MATERIAL, SECONDARY BATTERY, AND ELECTRONIC APPARATUS**

(57) A negative electrode material is provided, including a carbon-based material. In a thermogravimetric test, the negative electrode material has an exothermic peak within a temperature range of 600°C to 800°C in an air atmosphere. The negative electrode material of this application has excellent kinetic performance, thereby effectively improving discharge rate performance of a secondary battery including the negative electrode material.

FIG. 1

EP 4 579 797 A1

## Description

### TECHNICAL FIELD

This application relates to the field of energy storage, and in particular, to a negative electrode material, a secondary battery, and an electronic apparatus.

### BACKGROUND

With the widespread application of electrochemical apparatuses such as lithium-ion batteries as energy systems, their application directions are becoming increasingly diverse, and the fast charging and discharging application is one of the important directions. Therefore, it is crucial to develop an energy system with superior charging and discharging performance for its large-scale applications in transportation tools, power grids, wind energy systems, and solar energy systems.

However, fast charging and discharging of batteries poses some problems. For example, during charging and discharging at a high rate, due to the internal resistance of the battery itself, the temperature rises rapidly during charging and discharging, affecting the rate and safety performance of the battery. In the prior art, the impedance of the battery is reduced mainly by reducing the coating thickness of the electrode plate and decreasing the particle size of the negative electrode active material. However, this manner significantly decreases the energy density of the battery, compromises the endurance of the battery, and leads to high costs.

### SUMMARY

In view of the foregoing problems in the prior art, this application provides a negative electrode material and a secondary battery including such negative electrode material, so as to improve kinetics of a carbon-based negative electrode material, thereby improving discharge rate performance of the secondary battery including such negative electrode material.

According to a first aspect, this application provides a negative electrode material, including a carbon-based material, where in a thermogravimetric test, the negative electrode material has an exothermic peak within a temperature range of 600°C to 800°C in an air atmosphere. The exothermic peak of the negative electrode material within the temperature range of 600°C to 800°C is related to reactivity of the negative electrode material with active ions such as lithium ions. The negative electrode material of this application having the exothermic peak within the foregoing range can react with lithium ions faster, facilitating improvement in rate performance of a secondary battery. In some embodiments, the negative electrode material has an exothermic peak within a temperature range of 650°C to 750°C.

In some embodiments, a preparation method of the carbon-based material includes: sequentially performing graphite composite material preparation, spheroidization, coating, and carbonization on a graphite material, where the graphite material includes at least one of natural graphite or artificial graphite.

In some embodiments, the preparation process of the graphite composite material includes: dissolving one or more of natural graphite and artificial graphite and polymethyl methacrylate (PMMA) in N-N dimethylformamide (DMF), stirring the mixture for 10 h to 14 h at 50°C to 80°C, filtering and collecting a precipitate, washing the precipitate with deionized water and ethanol for 2 to 4 times, and fully drying the precipitate at 60°C to 90°C to obtain a graphite composite material precursor; and heating the graphite composite material precursor to 1000°C to 1200°C at a temperature rise velocity of 8°C/min to 16°C/min in a tube furnace, introducing a gas mixture of $CH_4/C_2H_2/H_2$ (at a ratio of (5-10):(5-10):(80-85)) into the tube furnace, maintaining at that temperature for 8 h to 12 h, and then cooling naturally to room temperature to obtain the graphite composite material.

In some embodiments, the process of spheroidization includes: applying continuous impact forces, compressive forces, and shear forces between a rotating disc, an inner wall, and particles to a mixture containing the graphite composite material and a dispersant solution, so as to spheroidize the graphite composite material. In some embodiments, a spheroidization time is 10 min to 20 min. In some embodiments, a spheroidization apparatus is used to apply the impact forces, compressive forces, and shear forces to the mixture, so as to implement collision, friction, shearing, bending, and folding of the mixture, thereby fixing micropowder onto large particles while removing edges and corners of the graphite composite material. In some embodiments, the spheroidization apparatus is a mixing granulator. In some embodiments, a rotation speed of the spheroidization apparatus is 30 Hz to 50 Hz. In some embodiments, the dispersant solution is an aqueous solution of carboxymethyl cellulose (CMC). In some embodiments, a mass percentage of the carboxymethyl cellulose in the dispersant solution is 0.5% to 2%. In some embodiments, based on a mass of the graphite material, a mass percentage of the dispersant solution is 5% to 20%.

In some embodiments, the process of coating includes: coating the spheroidized graphite composite material with asphalt. In some embodiments, based on a mass of the spheroidized graphite composite material, a mass percentage of the asphalt is 2% to 15%. In some embodiments, a carbonization temperature is 900°C to 1500°C.

In some embodiments, in a Raman test, the negative electrode material satisfies $0.2 \leq Id/Ig \leq 0.5$, where Id is an intensity of a peak at 1350 cm$^{-1}$ in a Raman spectrum, and Ig is an intensity of a peak at 1580 cm$^{-1}$ in the Raman spectrum. The value of Id/Ig can represent a defect degree of the negative electrode material, and a larger value of Id/Ig means a higher defect degree. A high defect degree can increase deintercalation and intercalation channels for active ions and increase deintercalation and intercalation speeds of active ions, thereby improving the kinetic performance of the negative electrode material. However, excessive defects lead to degradation in performance such as initial coulombic efficiency, cycling performance, and storage performance of the secondary battery. When the value of Id/Ig falls within the foregoing range, the secondary battery can exhibit good kinetics without significant degradation in performance such as initial coulombic efficiency and cycling performance. In some embodiments, $0.3 \leq Id/Ig \leq 0.5$.

In some embodiments, in a nitrogen adsorption and desorption test, the negative electrode material satisfies $0.002 \text{ cm}^3/\text{g} \leq S \leq 0.035 \text{ cm}^3/\text{g}$, where S is an adsorption volume of pores with a pore size of 3 nm to 35 nm in the negative electrode material. The adsorption volume of pores can represent the number of mesopores in the structure of the negative electrode material. A larger adsorption volume means a higher proportion of the mesopores and more pores in the negative electrode material, which can enhance lithium adsorption and intercalation of active ions, increasing capacity of the negative electrode material. However, excessive pores adversely affect the performance such as initial coulombic efficiency and cycling performance of the secondary battery. When the adsorption volume of pores with a pore size of 3 nm to 35 nm in the negative electrode material of this application falls within the foregoing range, the secondary battery exhibits high energy density without significant degradation in performance such as initial coulombic efficiency and cycling performance. In some embodiments, $0.004 \text{ cm}^3/\text{g} \leq S \leq 0.03 \text{ cm}^3/\text{g}$.

In some embodiments, in an X-ray diffraction test, a ratio of area C004 of a 004 crystal plane diffraction peak to area C110 of a 110 crystal plane diffraction peak of the negative electrode material satisfies $1 \leq C004/C110 \leq 6$. The value of C004/C110 is a parameter reflecting a crystal orientation degree of the negative electrode material. A larger value of C004/C110 means a higher crystal orientation degree, resulting in a more limited surface for active ions to be deintercalated from and intercalated into the negative electrode material. A smaller value of C004/C110 means a lower crystal orientation degree, allowing active ions to be deintercalated from and intercalated into the negative electrode material in multiple directions. When C004/C110 of the negative electrode material of this application falls within the foregoing range, active ions can be rapidly deintercalated from and intercalated into the negative electrode material, thereby further improving discharge rate performance of the secondary battery. In some embodiments, $1 \leq C004/C110 \leq 3$.

In some embodiments, in the X-ray diffraction test, an X-ray diffraction pattern of the negative electrode material exhibits a diffraction peak a at 2θ of 43° to 44° and a diffraction peak b at 2θ of 45° to 47°, where a peak intensity of the diffraction peak a is $I_a$, and a peak intensity of the diffraction peak b is $I_b$, where $2 \leq I_a/I_b \leq 6$. The diffraction peak a and diffraction peak b of the negative electrode material are related to a stacking sequence of rhombic (3R) graphene layers in graphite. The diffraction peak a and the diffraction peak b appear in the negative electrode material of this application, and the diffraction peak a has a higher peak intensity than the diffraction peak b, which means that an rhombohedral structure is present in the formed graphite, allowing for easier lithium deintercalation and intercalation. When the ratio of the peak intensity of the diffraction peak a to the peak intensity of the diffraction peak b in the negative electrode material of this application falls within the foregoing range, direct current internal resistance of the negative electrode material significantly decreases, thereby further improving the discharge rate performance of the secondary battery.

In some embodiments, a specific surface area of the negative electrode material is 4 cm$^2$/g to 20 cm$^2$/g. A smaller specific surface area of the negative electrode material means a smaller contact area with an electrolyte, so that fewer active ions are consumed during initial formation of an SEI film in the secondary battery, improving the initial coulombic efficiency. However, when the specific surface area is excessively small, electrolyte infiltration and active diffusion become difficult, thereby affecting the kinetic performance of the secondary battery. When the specific surface area of the negative electrode material of this application falls within the foregoing range, the secondary battery exhibits high initial coulombic efficiency without significant degradation in kinetic performance. In some embodiments, the specific surface area of the negative electrode material is 4 cm$^2$/g to 10 cm$^2$/g.

In some embodiments, $D_v50$ of the negative electrode material satisfies $5 \text{ μm} \leq D_v50 \leq 25 \text{ μm}$. Larger $D_v50$ of the negative electrode material means a higher corresponding gram capacity, but excessively large $D_v50$ affects the kinetic performance of the negative electrode material. $D_v50$ of the negative electrode material of this application falling within the foregoing range can ensure that the negative electrode material exhibits a high gram capacity without significant degradation in kinetic performance. In some embodiments, $10 \text{ μm} \leq D_v50 \leq 20 \text{ μm}$.

In some embodiments, a graphitization degree of the negative electrode material is 94% to 96%. When the graphitization degree of the negative electrode material falls within the foregoing range, the negative electrode material exhibits high capacity and high compacted density, thereby further increasing the gram capacity of the negative electrode material. In some embodiments, the graphitization degree of the negative electrode material is 94.5% to 96%.

According to a second aspect, this application provides a secondary battery, including a negative electrode, where the negative electrode includes a negative electrode current collector and a negative electrode active material layer disposed on at least one surface of the negative electrode current collector, where the negative electrode active material layer includes the negative electrode material according to the first aspect.

In some embodiments, the negative electrode further includes a conductive coating located between the negative electrode active material layer and the negative electrode current collector. In some embodiments, the conductive coating includes at least one of carbon fiber, Ketjen black, acetylene black, carbon nanotubes, or graphene. The conductive coating can conduct electrons, leading to significantly decreased charge transfer impedance, thereby further improving the kinetic performance of the secondary battery. In some embodiments, thickness of the conductive coating is 0.5 $\mu$m to 1.2 $\mu$m.

According to a third aspect, this application provides an electronic apparatus including the secondary battery according to the second aspect.

In this application, the discharge rate performance of the secondary battery including such negative electrode material is improved by improving the kinetic performance of the negative electrode material including the carbon-based material.

**BRIEF DESCRIPTION OF DRAWINGS**

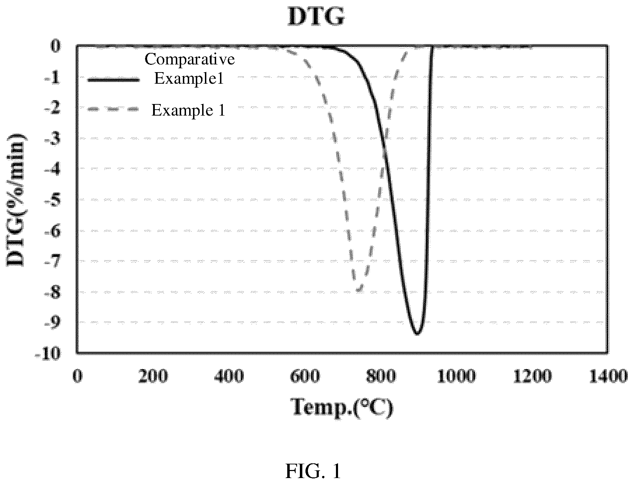

FIG. 1 is a diagram of thermogravimetric curves of negative electrode materials in Example 1 and Comparative Example 1 according to this application.

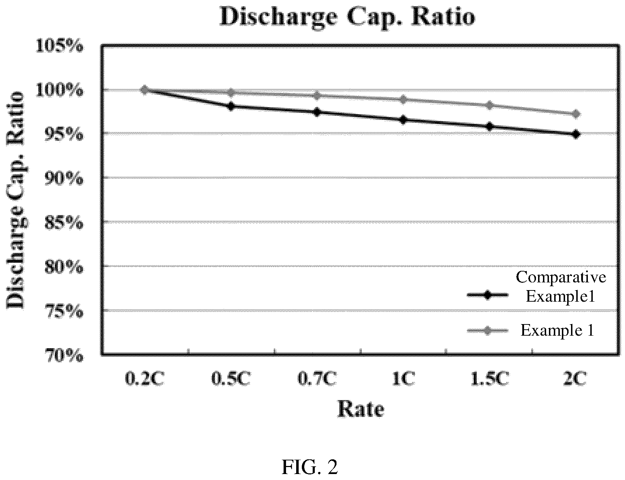

FIG. 2 shows capacity retention rate curves of lithium-ion batteries in Example 1 and Comparative Example 1 at different rates according to this application.

**DESCRIPTION OF EMBODIMENTS**

For brevity, this application specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual numerical value may itself be a lower limit or an upper limit which can be combined with any other point or individual numerical value or combined with another lower limit or upper limit to form a range not expressly recorded.

In the description of this application, unless otherwise specified, "more than" and "less than" are inclusive of the present number.

Unless otherwise specified, the terms used in this application have well-known meanings as commonly understood by persons skilled in the art. Unless otherwise specified, numerical values of parameters mentioned in this application may be measured by using various measurement methods commonly used in the art (for example, they may be tested by using the methods provided in some embodiments of this application).

A list of items connected by the terms "at least one of", "at least one piece of", and "at least one kind of" or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. The item A may include a single element or a plurality of elements. The item B may include a single element or a plurality of elements. The item C may include a single element or a plurality of elements.

The following further describes this application with reference to specific embodiments. It should be understood that these specific embodiments are merely intended to illustrate this application but not to limit the scope of this application.

I. Negative electrode material

The negative electrode material provided in this application includes a carbon-based material, where in a thermogravimetric test, the negative electrode material has an exothermic peak within a temperature range of 600°C to 800°C in an air atmosphere. The exothermic peak of the negative electrode material within the temperature range of 600°C to 800°C is related to reactivity of the negative electrode material with active ions such as lithium ions. The negative electrode material of this application having the exothermic peak within the foregoing range can react with lithium ions more easily, facilitating improvement in rate performance of a secondary battery. In some embodiments, the negative electrode material has an exothermic peak at 610°C, 620°C, 630°C, 640°C, 660°C, 670°C, 680°C, 690°C, 700°C, 710°C, 720°C, 730°C, 740°C, 760°C, 770°C, 780°C, 790°C, or within a range defined by any two of these values. In some embodiments, the negative electrode material has an exothermic peak within a temperature range of 650°C to 750°C. In this application, the negative electrode material having an exothermic peak within a temperature range of 600°C to 800°C means that a peak top temperature of the exothermic peak is within the temperature range of 600°C to 800°C.

In some embodiments, a preparation method of the carbon-based material includes: sequentially performing graphite composite material preparation, spheroidization, coating, and carbonization on one or more materials of natural graphite and artificial graphite.

In some embodiments, the preparation process of the graphite composite material includes: dissolving one or more of natural graphite and artificial graphite and polymethyl methacrylate (PMMA) in N-N dimethylformamide (DMF), stirring the mixture for 10 h to 14 h at 50°C to 80°C, filtering and collecting a precipitate, washing the precipitate with deionized water and ethanol for 2 to 4 times, and fully drying the precipitate at 60°C to 90°C to obtain a graphite composite material precursor; and heating the graphite composite material precursor to 1000°C to 1200°C at a temperature rise velocity of 8°C/min to 16°C/min in a tube furnace, introducing a gas mixture of $CH_4/C_2H_2/H_2$ (at a ratio of (5-10):(5-10):(80-85)) into the tube furnace, maintaining at that temperature for 8 h to 12 h, and then cooling naturally to room temperature to obtain the final graphite composite material.

In some embodiments, the process of spheroidization includes: applying continuous impact forces, compressive forces, and shear forces between a rotating disc, an inner wall, and particles to a mixture containing the graphite composite material and a dispersant solution, so as to spheroidize the graphite composite material. In some embodiments, a spheroidization time is 10 min to 20 minn, for example, 12 min, 14 min, 16 min, or 18 min. In some embodiments, a spheroidization apparatus is used to apply the impact forces, compressive forces, and shear forces to the mixture, so as to implement collision, friction, shearing, bending, and folding of the mixture, thereby fixing micropowder onto large particles while removing edges and corners of the graphite composite material. In some embodiments, the spheroidization apparatus is a mixing granulator. In some embodiments, a rotation speed of the spheroidization apparatus is 30 Hz to 50 Hz, for example, 35 Hz, 40 Hz, or 45 Hz.

In some embodiments, the dispersant solution is an aqueous solution of carboxymethyl cellulose (CMC). In some embodiments, a mass percentage of the carboxymethyl cellulose in the dispersant solution is 0.5% to 2%, for example, 0.7%, 1.0%, 1.3%, 1.5%, or 1.7%. In some embodiments, based on a mass of the graphite material, a mass percentage of the dispersant solution is 5% to 20%, for example, 7%, 10%, 13%, 15%, 17%, or 19%.

In some embodiments, the process of coating includes: coating the spheroidized graphite composite material with asphalt. In some embodiments, based on a mass of the spheroidized graphite composite material, a mass percentage of the asphalt is 2% to 15%, for example, 3%, 4%, 5%, 6%, 7%, 8%, 9%, 10%, 11%, 12%, 13%, or 14%. In some embodiments, a carbonization temperature is 900°C to 1500°C, for example, 950°C, 1000°C, 1050°C, 1100°C, 1150°C, 1200°C, 1250°C, 1300°C, 1350°C, 1400°C, or 1450°C. In some embodiments, a carbonization time is 3 h to 10 h, for example, 4 h, 5 h, 6 h, 7 h, 8 h, or 9 h.

In some embodiments, in a Raman test, the negative electrode material satisfies $0.2 \leq Id/Ig \leq 0.5$, where Id is an intensity of a peak at 1350 $cm^{-1}$ in a Raman spectrum, and Ig is an intensity of a peak at 1580 $cm^{-1}$ in the Raman spectrum. The value of Id/Ig can represent a defect degree of the negative electrode material, and a larger value of Id/Ig means a higher defect degree. A high defect degree can increase deintercalation and intercalation channels for active ions and increase deintercalation and intercalation speeds of active ions, thereby improving the kinetic performance of the negative electrode material. However, excessive defects lead to degradation in performance such as initial coulombic efficiency, cycling performance, and storage performance of the secondary battery. When the value of Id/Ig falls within the foregoing range, the secondary battery can exhibit good kinetics without significant degradation in performance such as initial coulombic efficiency and cycling performance. In some embodiments, Id/Ig is 0.23, 0.25, 0.27, 0.29, 0.33, 0.35, 0.37, 0.4, 0.43, 0.45, 0.47, or within a range defined by any two of these values. In some embodiments, $0.3 \leq Id/Ig \leq 0.5$.

In some embodiments, in a nitrogen adsorption and desorption test, the negative electrode material satisfies $0.002 \, cm^3/g \leq S \leq 0.035 \, cm^3/g$, where S is an adsorption volume of pores with a pore size of 3 nm to 35 nm in the negative electrode material. The adsorption volume of pores can represent the number of mesopores in the structure of the negative electrode material. A larger adsorption volume means a higher proportion of the mesopores and more pores in the negative electrode material, which can enhance lithium adsorption and intercalation of active ions, increasing capacity of the negative electrode material. However, excessive pores adversely affect the performance such as initial coulombic efficiency and cycling performance of the secondary battery. When the adsorption volume of pores with a pore size of 3 nm to 35 nm in the negative electrode material of this application falls within the foregoing range, the secondary battery exhibits high energy density without significant degradation in performance such as initial coulombic efficiency and cycling performance. In some embodiments, S is 0.006 $cm^3/g$, 0.008 $cm^3/g$, 0.01 $cm^3/g$, 0.011 $cm^3/g$, 0.012 $cm^3/g$, 0.013 $cm^3/g$, 0.014 $cm^3/g$, 0.015 $cm^3/g$, 0.016 $cm^3/g$, 0.017 $cm^3/g$, 0.018 $cm^3/g$, 0.019 $cm^3/g$, 0.02 $cm^3/g$, 0.021 $cm^3/g$, 0.022 $cm^3/g$, 0.023 $cm^3/g$, 0.024 $cm^3/g$, 0.025 $cm^3/g$, 0.026 $cm^3/g$, 0.027 $cm^3/g$, 0.028 $cm^3/g$, 0.029 $cm^3/g$, 0.031 $cm^3/g$, 0.032 $cm^3/g$, 0.033 $cm^3/g$, 0.034 $cm^3/g$, or within a range defined by any two of these values. In some embodiments, $0.004 \, cm^3/g \leq S \leq 0.03 \, cm^3/g$.

In some embodiments, in an X-ray diffraction test, a ratio of area C004 of a 004 crystal plane diffraction peak to area C110 of a 110 crystal plane diffraction peak of the negative electrode material satisfies $1 \leq C004/C110 \leq 6$. The value of C004/C110 is a parameter reflecting a crystal orientation degree of the negative electrode material. A larger value of C004/C110 means a higher crystal orientation degree, resulting in a more limited surface for active ions to be deintercalated from and intercalated into the negative electrode material. A smaller value of C004/C110 means a lower crystal orientation degree, allowing active ions to be deintercalated from and intercalated into the negative electrode material in multiple directions. In some embodiments, C004/C110 is 1.2, 1.4, 1.6, 1.8, 2.3, 2.5, 2.7, 3.0, 3.3, 3.5, 3.7, 4.0, 4.3, 4.5, 4.7, 5.0, 5.3, 5.5, 5.7, or within a range defined by any two of these values. When C004/C110 of the negative electrode material of this application falls within the foregoing range, active ions can be rapidly deintercalated from and intercalated into the negative electrode material, thereby further improving discharge rate performance of the secondary battery. In some embodiments, $1 \leq C004/C110 \leq 3$.

In some embodiments, in the X-ray diffraction test, an X-ray diffraction pattern of the negative electrode material exhibits a diffraction peak a at $2\theta$ of 43° to 44° and a diffraction peak b at $2\theta$ of 45° to 47°, where a peak intensity of the diffraction peak a is $I_a$, and a peak intensity of the diffraction peak b is $I_b$, where $2 \leq I_a/I_b \leq 6$. In some embodiments, $I_a/I_b$ is 2.3, 2.5, 2.7, 3.0, 3.3, 3.5, 3.7, 4.0, 4.3, 4.5, 4.7, 5.0, 5.3, 5.5, 5.7, 5.9, or within a range defined by any two of these values. The diffraction peak a and diffraction peak b of the negative electrode material are related to a stacking sequence of rhombic (3R) graphene layers in graphite. The diffraction peak a and the diffraction peak b appear in the negative electrode material of this application, and the diffraction peak a has a higher peak intensity than the diffraction peak b, which means that an rhombohedral structure is present in the formed graphite, allowing for easier lithium deintercalation and intercalation. When the ratio of the peak intensity of the diffraction peak a to the peak intensity of the diffraction peak b in the negative electrode material of this application falls within the foregoing range, direct current internal resistance of the negative electrode material significantly decreases, thereby further improving the discharge rate performance of the secondary battery.

In some embodiments, a specific surface area of the negative electrode material is 4 cm$^2$/g to 20 cm$^2$/g. A smaller specific surface area of the negative electrode material means a smaller contact area with an electrolyte, so that fewer active ions are consumed during initial formation of an SEI film in the secondary battery, improving the initial coulombic efficiency. However, when the specific surface area is excessively small, electrolyte infiltration and active diffusion become difficult, thereby affecting the kinetic performance of the secondary battery. When the specific surface area of the negative electrode material of this application falls within the foregoing range, the secondary battery exhibits high initial coulombic efficiency without significant degradation in kinetic performance. In some embodiments, the specific surface area of the negative electrode material is 5 cm$^2$/g, 5.5 cm$^2$/g, 6 cm$^2$/g, 6.5 cm$^2$/g, 7 cm$^2$/g, 7.5 cm$^2$/g, 8 cm$^2$/g, 8.5 cm$^2$/g, 9 cm$^2$/g, 9.5 cm$^2$/g, 10.5 cm$^2$/g, 11 cm$^2$/g, 12 cm$^2$/g, 13 cm$^2$/g, 14 cm$^2$/g, 15 cm$^2$/g, 16 cm$^2$/g, 17 cm$^2$/g, 18 cm$^2$/g, 19 cm$^2$/g, or within a range defined by any two of these values. In some embodiments, the specific surface area of the negative electrode material is 4 cm$^2$/g to 10 cm$^2$/g.

In some embodiments, $D_v50$ of the negative electrode material satisfies $5\ \mu m \leq D_v50 \leq 25\ \mu m$. Larger $D_v50$ of the negative electrode material means a higher corresponding gram capacity, but excessively large $D_v50$ affects the kinetic performance of the negative electrode material. $D_v50$ of the negative electrode material of this application falling within the foregoing range can ensure that the negative electrode material exhibits a high gram capacity without significant degradation in kinetic performance. In some embodiments, $D_v50$ is 6 $\mu m$, 8 $\mu m$, 11 $\mu m$, 12 $\mu m$, 13 $\mu m$, 14 $\mu m$, 15 $\mu m$, 16 $\mu m$, 17 $\mu m$, 18 $\mu m$, 19 $\mu m$, 21 $\mu m$, 22 $\mu m$, 23 $\mu m$, 24 $\mu m$, or within a range defined by any two of these values. In some embodiments, $10\ \mu m \leq D_v50 \leq 20\ \mu m$. In this application, $D_v50$ means that based on the distribution by volume, 50% of the particles of the negative electrode material have a particle size smaller than this value.

In some embodiments, a graphitization degree of the negative electrode material is 94% to 96%. When the graphitization degree of the negative electrode material falls within the foregoing range, the negative electrode material exhibits high capacity and high compacted density, thereby further increasing the gram capacity of the negative electrode material. In some embodiments, the graphitization degree of the negative electrode material is 94.3%, 94.7%, 95%, 95.3%, 95.5%, or 95.7%. In some embodiments, the graphitization degree of the negative electrode material is 94.5% to 96%.

II. Secondary battery

The secondary battery provided in this application includes a negative electrode, where the negative electrode includes a negative electrode current collector and a negative electrode active material layer disposed on at least one surface of the negative electrode current collector, where the negative electrode active material layer includes the negative electrode material according to the first aspect.

In some embodiments, the negative electrode further includes a conductive coating located between the negative electrode active material layer and the negative electrode current collector. In some embodiments, the conductive coating includes at least one of carbon fiber, Ketjen black, acetylene black, carbon nanotubes, or graphene. The conductive coating can conduct electrons, leading to significantly decreased charge transfer impedance, thereby further improving the kinetic performance of the secondary battery. In some embodiments, thickness of the conductive coating is 0.5 μm to 1.2 μm. In some embodiments, the thickness of the conductive coating is 0.6 μm, 0.7 μm, 0.8 μm, 0.9 μm, 1.0 μm, 1.1 μm, or within a range defined by any two of these values.

In some embodiments, the negative electrode current collector includes copper foil, aluminum foil, nickel foil, stainless steel foil, titanium foil, nickel foam, copper foam, a polymer substrate coated with conductive metal, or any combination thereof.

In some embodiments, the negative electrode active material layer further includes a binder and a conductive agent. In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

In some embodiments, the conductive agent includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The secondary battery of this application further includes a positive electrode, where the positive electrode includes a positive electrode current collector and a positive electrode active material layer, and the positive electrode active material layer includes a positive electrode active material, a binder, and a conductive agent.

According to some embodiments of this application, the positive electrode current collector may be a metal foil current collector or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

According to some embodiments of this application, the positive electrode active material includes at least one of lithium cobalt oxide, lithium nickel manganese cobalt oxide, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganate, spinel-type lithium nickel manganate, or lithium titanate. In some embodiments, the binder includes a binder polymer, for example, at least one of polyvinylidene fluoride, polytetrafluoroethylene, polyolefin, sodium carboxymethyl cellulose, lithium carboxymethyl cellulose, modified polyvinylidene fluoride, modified SBR rubber, or polyurethane. In some embodiments, the polyolefin binder includes at least one of polyethylene, polypropylene, polyester, polyvinyl alcohol, or polyacrylic acid. In some embodiments, the conductive agent includes a carbon-based material such as natural graphite, artificial graphite, carbon black, acetylene black, Ketjen black, or carbon fiber; a metal-based material such as metal powder or metal fiber including copper, nickel, aluminum, silver, and the like; a conductive polymer such as a polyphenylene derivative; or a mixture thereof.

The secondary battery of this application further includes a separator. The separator used in the secondary battery of this application is not limited to any particular material or shape, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, film, or composite film having a porous structure, and material of the substrate layer is selected from at least one of polyethylene, polypropylene, polyethylene glycol terephthalate, or polyimide. Specifically, the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer, and the surface treatment layer may be a polymer layer, an inorganic substance layer, or a layer formed by mixing a polymer and an inorganic substance. The inorganic substance layer includes inorganic particles and a binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and material of the polymer is selected from at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

The secondary battery of this application further includes an electrolyte. An electrolyte that can be used in this application may be an electrolyte known in the prior art.

According to some embodiments of this application, the electrolyte includes an organic solvent, a lithium salt, and an optional additive. The organic solvent in the electrolyte of this application may be any organic solvent known in the prior art that can be used as a solvent of the electrolyte. The electrolytic salt used in the electrolyte according to this application is not limited, and may be any electrolytic salt known in the prior art. The additive of the electrolyte according to this application may be any additive known in the prior art that can be used as an additive of the electrolyte. In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, including at least one of 1,3-dioxolane (DOL) or dimethoxyethane (DME). In some embodiments, the lithium salt includes at least one of an organic lithium salt or an inorganic lithium salt. In some embodiments, the lithium salt includes but is not limited to lithium hexafluorophosphate (LiPF$_6$), lithium tetrafluoroborate (LiBF$_4$), lithium difluorophosphate (LiPO$_2$F$_2$), lithium bistrifluoromethanesulfonimide LiN(CF$_3$SO$_2$)$_2$ (LiTFSI), lithium bis(fluorosulfonyl)imide Li(N(SO$_2$F)$_2$) (LiFSI), lithium bis(oxalato)borate LiB(C$_2$O$_4$)$_2$ (LiBOB), or lithium difluoro(oxalato)borate LiBF$_2$(C$_2$O$_4$) (LiDFOB). In some embodiments, the additive includes at least one of fluoroethylene carbonate or adiponitrile.

According to some embodiments of this application, the secondary battery of this application includes but is not limited to a lithium-ion battery or a sodium-ion battery. In some embodiments, the secondary battery includes a lithium-ion battery.

III. Electronic apparatus

This application further provides an electronic apparatus, including the secondary battery according to the second aspect of this application.

The electronic device or apparatus of this application is not particularly limited. In some embodiments, the electronic device of this application includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

In the following examples and comparative examples, all reagents, materials, and instruments used are commercially available unless otherwise specified.

**Examples and Comparative Examples**

**Example 1**

Preparation of negative electrode material

95 g of artificial graphite and 5 g of polymethyl methacrylate (PMMA) were selected, dissolved in 100 mL N-N dimethylformamide (DMF), and stirred at 70°C for 12 h. A precipitate was filtered and collected, the precipitate was washed with deionized water and ethanol for 2 times and fully dried at 80°C to obtain a graphite composite material precursor, the graphite composite material precursor was heated to 1100°C at a temperature rise velocity of 10°C/min in a tube furnace, then a gas mixture of CH$_4$/C$_2$H$_2$/H$_2$ (at a ratio of 5:10:85) was introduced into the tube furnace, and the graphite composite material precursor was maintained at that temperature for 10 h and then cooled naturally to room temperature to obtain the final graphite composite material. The graphite composite material was mixed with 10% CMC aqueous solution with a solid content of 1%, the mixture was spheroidized using a spheroidization device for 15 minutes at a rotation speed of 40 Hz, and then the spheroidized graphite composite material was coated with 5% asphalt. Ultimately, the coated mixture was heated to 1000°C at a velocity of 5°C/min, maintained at that temperature for 5 h, and then cooled naturally to room temperature to obtain a carbon-based material, namely, the negative electrode material.

Preparation of negative electrode

The prepared negative electrode material, a binder styrene-butadiene rubber (SBR for short), and a thickener sodium carboxymethyl cellulose (CMC for short) were fully stirred and mixed at a weight ratio of 97:1.5:1.5 in an appropriate amount of deionized water solvent to form a uniform negative electrode slurry; and the slurry was applied onto a current collector Cu foil with a 1 μm thick conductive coating, followed by drying and cold pressing, to obtain a negative electrode plate.

Preparation of positive electrode

Lithium cobalt oxide (chemical formula: $LiCoO_2$) was selected as a positive electrode active material. The positive electrode active material, a conductive agent acetylene black, and a binder polyvinylidene fluoride (PVDF for short) were fully stirred and mixed at a weight ratio of 96.3:2.2:1.5 in an appropriate amount of N-methylpyrrolidone (NMP for short) solvent to form a uniform positive electrode slurry; and the slurry was applied onto a current collector Al foil, followed by drying and cold pressing, to obtain a positive electrode plate.

Preparation of electrolyte

In a dry argon atmosphere glove box, ethylene carbonate (EC), propylene carbonate (PC), ethyl methyl carbonate (EMC), and diethyl carbonate (DEC) were mixed at a mass ratio of EC:EMC:DEC = 2:2:3:3, then fluoroethylene carbonate and vinyl sulfate were added and dissolved, the mixture was fully stirred, and then lithium salt $LiPF_6$ was added and evenly mixed to obtain an electrolyte. A mass percentage of the $LiPF_6$ was 12.5%, a mass percentage of the fluoroethylene carbonate was 4%, and a mass percentage of the vinyl sulfate was 2%. The mass percentages of the substances were calculated based on a mass of the electrolyte.

Preparation of lithium-ion battery

The positive electrode, a separator (polyethylene porous polymer film), and the negative electrode were sequentially stacked so that the separator was located between the positive electrode and the negative electrode for separation. Then, the resulting stack was wound to form an electrode assembly. After tabs were welded, the electrode assembly was placed in an outer package aluminum foil plastic film, and the prepared electrolyte was injected into the dried electrode assembly, followed by processes such as vacuum packaging, standing, formation, shaping, and capacity testing, to obtain a pouch lithium-ion battery.

**Examples 2 to 10 and Comparative Examples 1 and 2**

Preparation of negative electrode material

The preparation process of the negative electrode material was similar to that in Example 1 except that the corresponding negative electrode materials were prepared by adjusting the parameters such as the ratio of the carbon-based material to PMMA, the rotation speed of the spheroidization device, the carbonization temperature, and the temperature maintaining time in the preparation process. The specific preparation parameters are shown in Table a.

**Table a**

| Example and Comparative Example | Ratio of carbon-based material to PMMA | Rotation speed of spheroidization device (Hz) | Percentage of residual carbon in coating asphalt (%) | **Carbonization** temperature (°C) |
|---|---|---|---|---|
| Example 1 | 95:5 | 40 | 5 | 1000 |
| Example 2 | 90:10 | 50 | 6 | 950 |
| Example 3 | 85:15 | 45 | 7 | 1050 |
| Example 4 | 95:5 | 35 | 8 | 1100 |
| Example 5 | 90:10 | 50 | 9 | 1150 |
| Example 6 | 85:15 | 45 | 10 | 1200 |
| Example 7 | 95:5 | 40 | 11 | 1250 |
| Example 8 | 90:10 | 35 | 12 | 1300 |
| Example 9 | 85:15 | 50 | 13 | 1400 |
| Example 10 | 85:15 | 45 | 14 | 1500 |
| Comparative Example 1 | 100:0 | 40 | 5 | 1000 |
| Comparative Example 2 | 75:25 | 40 | 5 | 1000 |

The preparations of the positive electrode, electrolyte, and lithium-ion battery were the same as those in Example 1.

## Examples 11 to 20

Preparation of negative electrode material

The preparation process of the negative electrode material was similar to that in Example 1 except that the value of Id/Ig of the negative electrode material was adjusted by adjusting the percentage of residual carbon in the coating asphalt. In the preparation processes in Examples 11 to 20, the percentages of residual carbon in the coating asphalt were 8%, 11%, 2%, 15%, 5%, 14%, 12.5%, 3.5%, 6.5%, and 9.5% respectively.

The preparations of the positive electrode, electrolyte, and lithium-ion battery were the same as those in Example 1.

## Examples 21 to 30

Preparation of negative electrode material

The preparation process of the negative electrode material was similar to that in Example 16 except that the cumulative volume value of pores from 3 nm to 35 nm of the negative electrode material was adjusted by adjusting the temperature rise velocity during carbonization. In the preparation processes in Examples 21 to 30, the temperature rise velocities during carbonization were 2.5°C/min, 9.5°C/min, 8°C/min, 9°C/min, 6.5°C/min, 5°C/min, 1.5°C/min, 8.5°C/min, 10°C/min, and 2.5% respectively.

The preparations of the positive electrode, electrolyte, and lithium-ion battery were the same as those in Example 16.

## Examples 31 to 40

The preparation process of the negative electrode material was similar to that in Example 23 except that the value of C004/C110 of the negative electrode material was adjusted by adjusting the solid content of the CMC solution, the value of $I_a/I_b$ of the negative electrode material was adjusted by adjusting the spheroidization time, and the value of the specific surface area of the negative electrode material was adjusted by adjusting the coking value of the asphalt.

The preparations of the positive electrode, electrolyte, and lithium-ion battery were the same as those in Example 23.

## Test method

### 1. Thermogravimetric test of negative electrode material

Negative electrode material powder was put into a thermogravimetric tester, with temperature set to 20°C to 1000°C, a temperature rise velocity of 10°C/min, and a gas atmosphere of air.

### 2. Raman test of negative electrode material

The negative electrode material was scanned using a laser microscope confocal Raman spectrometer (Raman, HR Evolution, HORIBA Scientific) to obtain peaks g and peaks g of all particles in this area range, the data was processed using a LabSpec software to obtain peak intensities of peak d and peak g of each particle, which were Id and Ig respectively, the frequency of Id/Ig was counted with a step of 0.02 to obtain a normal distribution graph, the (Id/Ig)max and (Id/Ig)min of these particles were counted, and the average value of Id/Ig was calculated, namely, the value of Id/Ig of the negative electrode active material. The laser wavelength of the Raman spectrometer can be within a range of 532 nm to 785 nm.

Peak d: generally located around 1350 cm$^{-1}$, which is caused by symmetric stretching vibration and radial breathing mode of sp2 carbon atoms in aromatic rings (structural defects).

Peak g: located around 1580 cm$^{-1}$, which is caused by stretching vibration of sp2 carbon atoms and corresponds to vibration of E2g optical phonon at the center of Brillouin zone (in-plane vibration of carbon atoms).

### 3. Pore size distribution test of negative electrode material

(1) 20 g to 30 g of the negative electrode material sample was weighed and compressed, and then 1.5 g to 3.5 g of the sample obtained after compression was weighed and placed in a test sample tube;

(2) the sample was subjected to degassing at 200°C for 2 h;

(3) high-purity nitrogen was introduced, so that the sample adsorbed nitrogen in a liquid nitrogen temperature environment until saturation; and

(4) data was extracted from the obtained $N_2$ adsorption-desorption curve based on a BJH model to obtain a BJH cumulative pore size volume distribution curve, and the adsorption volumes corresponding to pores within different pore size ranges can be calculated.

### 4. Particle size ($D_v50$) test of negative electrode material

For the test method of the particle size, reference was made to GB/T 19077-2016. The specific process was as follows: 1 g of the negative electrode material sample was weighed and evenly mixed with 20 mL deionized water and a small amount of dispersant, the mixture was placed in an ultrasonic device for ultrasounding for 5 min, and then the solution was poured into a sample injection system Hydro 2000SM for testing, where the test device used was Mastersizer 3000 manufactured by Malvern.

During the test, when a laser beam passed through the dispersed particle sample, the particle size was measured by measuring the intensity of scattered light. Then, the data was used to analyze and calculate the particle size distribution that formed the scattered light spectrogram. A particle size of the negative electrode material where the cumulative distribution by volume reached 50% as counted from the small particle size side was $D_v50$ of the negative electrode material. The refractive index of the particles used in the test was 1.8, each sample was measured three times, and the particle size was ultimately determined by taking the average value of the three measurements.

### 5. Specific surface area test of negative electrode material

For the test method of the specific surface area, reference was made to GB/T 19587-2017. The specific process was as follows: 1 g to 8 g of the negative electrode material sample (the weighed sample was at least 1/3 of the volume of the sphere) was weighed, placed in a 1/2-inch long tube with a bulb (the diameter of the spherical part was 12 mm), pre-treated at 200°C for 2 h, and then placed in a test device TriStar3030 (Micromeritics, USA) for testing, with an adsorption gas used being $N_2$ (purity: 99.999%) and a testing condition being 77 K. The specific surface area was measured using the BET calculation method.

### 6. Graphitization degree test of negative electrode material

High-purity silicon powder was used as a standard sample. The negative electrode material sample and the silicon standard sample were mixed at a weight ratio of 5:1 for testing to obtain the 002 peak of the negative electrode material and the 111 peak of the silicon. The 002 peak of the negative electrode material obtained from the test was calibrated, and the graphitization degree of the negative electrode material was indirectly calculated based on the calibrated spacing d002 of the 002 crystal plane. The calculation formula was as follows: $g = \frac{0.344 - d002}{(0.344 - 0.3354)}$ , where 0.3440 represented the interlayer spacing of fully ungraphitized carbon, and 0.3354 represented the interlayer spacing of ideal graphite, both in nm.

### 7. XRD test of negative electrode material

An X-ray powder diffractometer (XRD, instrument model: Bruker D8 ADVANCE) was used to test the negative electrode material to obtain an XRD test curve, where the target material was Cu K$\alpha$, the voltage/current was 40 KV/40 mA, the scanning angle was 5° to 80°, the scanning step was 0.00836°, and the time for each scanning step was 0.3s.

The peak a was located at a diffraction angle $2\theta$ of 43° to 44°, the peak b was located at a diffraction angle $2\theta$ of 45° to 47°, and $I_a$ and $I_b$ were the highest intensity values of the diffraction peak a and diffraction peak b respectively.

The diffraction peak of the (004) crystal plane (the 004 peak in the XRD pattern of the negative electrode material) was located at a diffraction angle $2\theta$ of 52° to 57°, and the diffraction peak of the (110) crystal plane (the 110 peak in the XRD pattern of the negative electrode material) was located at a diffraction angle $2\theta$ of 75° to 80°. The peak area value of the 004 peak in integral calculation was denoted as C004, and the peak area value of the 110 peak in integral calculation was denoted as C110, so as to calculate the value of C004/C110 of the negative electrode material.

La and Lc were calculated using the (110) crystal plane and the full width at half maximum of the (002) diffraction peak in the XRD pattern of the negative electrode material according to the Scherrer equation. Scherrer equation: D =

K$\lambda$/($\beta cos\theta$), where k is a constant; $\lambda$ is the X-ray wavelength; $\beta$ is the full width at half maximum of the diffraction peak; and $\theta$ is the diffraction angle. In the foregoing equation, the value of the constant k is related to the definition of $\beta$. When $\beta$ is the full width at half maximum, k is 0.89; and when $\beta$ is the integral width, k is 1.0.

**8. Gram capacity and initial coulombic efficiency tests**

(1) Preparation of button cell: The negative electrode, lithium sheet, separator, electrolyte, steel sheet, and nickel foam prepared in the foregoing example and a button cell housing were assembled together to obtain a button cell, and the button cell was left standing for 6 h before the test.
(2) The button cell was placed on a LAND tester for testing. The testing process was as follows: the button cell was discharged to 5 mV at 0.05C, left standing for 5 min, discharged to 5 mV at 0.05 mA, discharged to 5 mV at 0.01 mA, and charged to 2.0 V at 0.1C to obtain a charge capacity. Ultimately, the charge capacity divided by the weight of the active substance is the gram capacity of the negative electrode material. The initial coulombic efficiency could be obtained by dividing the charge capacity by the discharge capacity.

**9. DCR direct current resistance test of lithium-ion battery**

(1) at a test temperature of 25°C;
(2) left standing for 60 min;
(3) to 4.43 V at 0.5C CC (constant current), and to 0.025C at CV (constant voltage);
(4) left standing for 10 min, and
discharged at 25°C;
(5) to 3 V at 0.1C DC (direct current);
(6) left standing for 10 min;
(7) to 4.43V at 0.5C CC, and to 0.025C at CV;
(8) left standing for 1 h;
(9) at 0.1C DC for 10s;
(10) at 1C DC for 1s;
(11) left standing for 1 h;
(12) at 0.5C DC for 6 min;
(13) if the voltage is $\leq$ 2.5 V, proceed to step 15;
(14) repeat steps 8 to 13 for 26 cycles;
(15) left standing for 10 min;
(16) to 3.95 V at 0.5C CC, and to 0.025C at CV; and
(17) left standing for 10 min.

The resistance DCR of the battery at 70% SOC was taken, and the test was completed.

**10. Discharge capacity retention rate test**

(1) at a test temperature of 25°C;
(2) left standing for 30 min;
(3) to 3 V at 0.5C DC (direct current);
(4) left standing for 5 min;
(5) to 4.43 V at 0.5C CC (constant current), and to 0.025C at CV (constant voltage);
(6) left standing for 5 min;
(7) to 3 V at XX DC, where
XX = {0.2C, 0.5C, 0.7C, 1C, 1.5C, 2C};
(8) left standing for 5 min;
(9) repeat steps 5 to 8, where all the rates were tested in turn according to the rate conditions; and
(10) left standing for 5 min.

The discharge capacity retention rate at 2C of the lithium-ion battery was calculated according to the following formula: discharge capacity retention rate at 2C = discharge capacity at 2C/discharge capacity at 0.2C $\times$ 100%.

**Test result**

Table 1 shows the influences of the peak value temperature of the exothermic peak on the performance of the lithium-ion battery in the thermogravimetric test of the negative electrode material. In the examples and comparative examples in Table 1, Id/Ig is 0.254, the cumulative volume of pores from 3 nm to 35 nm is 2.18$\times$ 10$^{-3}$ cm$^3$/g, C004/C110 is 4.77, and $I_a/I_b$ is 1.89.

**Table 1**

| Example and Comparative Example | Peak value of exothermic peak (°C) | Discharge capacity retention rate at 2C (%) |
|---|---|---|
| Example 1 | 691.7 | 96.3 |
| Example 2 | 676.8 | 96.7 |
| Example 3 | 686.6 | 96.4 |
| Example 4 | 694.1 | 96.3 |
| Example 5 | 714.8 | 96.2 |
| Example 6 | 661.4 | 97 |
| Example 7 | 719.2 | 96.3 |
| Example 8 | 682.9 | 96.5 |
| Example 9 | 727.3 | 96 |
| Example 10 | 704.8 | 96.2 |
| Comparative Example 1 | 879.5 | 93.8 |
| Comparative Example 2 | 550 | 92.2 |

It can be learned from the data in Table 1 that when the negative electrode material in the lithium-ion battery is burned at 500°C to 1000°C in the air atmosphere and the peak value of the exothermic peak is 600°C to 800°C, the secondary battery exhibits a good capacity retention rate at a discharge rate of 2C. It is presumed that the reactivity of the graphite negative electrode material with this characteristic with lithium ions is significantly improved, which is conducive to rapid deintercalation of lithium ions during discharging, resulting in a high capacity retention rate at a discharge rate of 2C and improved kinetic performance.

In Table 2, the influences of the value of Id/Ig of the negative electrode material on the performance of the lithium-ion battery are further studied based on Example 1.

**Table 2**

| Example | Id/Ig | Discharge capacity retention rate at 2C (%) |
|---|---|---|
| Example 1 | 0.254 | 96.3 |
| Example 11 | 0.389 | 97.1 |
| Example 12 | 0.423 | 97.3 |
| Example 13 | 0.349 | 96.4 |
| Example 14 | 0.470 | 97.8 |
| Example 15 | 0.382 | 97.1 |
| Example 16 | 0.467 | 97.6 |
| Example 17 | 0.464 | 97.4 |
| Example 18 | 0.375 | 96.6 |
| Example 19 | 0.386 | 97.1 |

(continued)

| Example | Id/Ig | Discharge capacity retention rate at 2C (%) |
|---|---|---|
| Example 20 | 0.419 | 97.2 |

It can be learned from the data in Table 2 that Examples 11 to 20 all exhibit better discharge rate performance. It is presumed that the value of Id/Ig of the negative electrode material falls within an appropriate range, which leads to more defects on the surface of the negative electrode material, stronger reactivity with lithium ions, increased diffusion rate, and good kinetic performance of the active material, thereby allowing the lithium-ion battery to exhibit good discharge rate performance.

In Table 3, the influences of the cumulative volume of pores from 3 nm to 35 nm of the negative electrode material on the performance of the lithium-ion battery are further studied based on Example 16.

**Table 3**

| Example | Cumulative volume of pores from 3 nm to 35 nm ($10^{-3}$ cm$^3$/g) | Gram capacity (mAh/g) | Discharge capacity retention rate at 2C (%) |
|---|---|---|---|
| Example 16 | 2.18 | 350.1 | 97.6 |
| Example 21 | 24.63 | 353.2 | 98.2 |
| Example 22 | 7.63 | 351.8 | 97.8 |
| Example 23 | 15.51 | 352.9 | 97.9 |
| Example 24 | 12.34 | 352.2 | 97.8 |
| Example 25 | 17.39 | 353.0 | 98.0 |
| Example 26 | 19.59 | 353.1 | 98.1 |
| Example 27 | 32.34 | 353.7 | 98.4 |
| Example 28 | 15.13 | 352.4 | 97.9 |
| Example 29 | 5.56 | 351.6 | 97.8 |
| Example 30 | 20.02 | 353.1 | 98.2 |

It can be learned from the data in Table 3 that when the cumulative volume of pores of the negative electrode material falls within the range of $4 \times 10^{-3}$ cm$^3$/g to $30 \times 10^{-3}$ cm$^3$/g, the gram capacity of the negative electrode material satisfies Cap $\geq 350$ mAh/g, resulting in further increased discharge capacity retention rate at 2C of the lithium-ion battery.

In Table 4, the influences of the C004/C110, $I_a/I_b$, BET, $D_v50$, and graphitization degree of the negative electrode material on the performance of the lithium-ion battery are further studied based on Example 23. In the XRD pattern of the negative electrode material, the peak intensity of the diffraction peak at 2θ of 43° to 44° is $I_a$, and the peak intensity of the diffraction peak at 2θ of 45° to 47° is $I_b$.

**Table 4**

| Example | C004/C110 | $I_a/I_b$ | BET (m²/g) | $D_v50$ (μm) | Graphitization degree (%) | Initial coulombic efficiency (%) | Gram capacity (mAh/g) | DCR (mΩ) | Discharge capacity retention rate at 2C (%) |
|---|---|---|---|---|---|---|---|---|---|
| Example 23 | 4.77 | 1.89 | 17 | 21 | 94.4 | 85.7 | 352.9 | 50.77 | 97.9 |
| Example 31 | 2.16 | 2.34 | 12 | 22 | 94.7 | 86.1 | 351 | 46.37 | 97.6 |
| Example 32 | 2.38 | 4.23 | 15 | 24 | 95.7 | 85.9 | 357 | 46.29 | 97.62 |
| Example 33 | 5.13 | 5.35 | 11 | 7 | 94.5 | 86.2 | 347 | 47.17 | 97.67 |
| Example 34 | 4.14 | 3.78 | 13 | 9 | 94.8 | 86.1 | 342 | 48.95 | 97.59 |
| Example 35 | 4.76 | 3.67 | 4 | 23 | 95.8 | 88.5 | 354.6 | 45.71 | 97.66 |
| Example 36 | 3.91 | 4.46 | 7 | 25 | 95.6 | 87.5 | 355.7 | 45.29 | 97.59 |
| Example 37 | 3.41 | 5.48 | 15 | 15 | 95.5 | 85.8 | 347.6 | 46.83 | 97.6 |
| Example 38 | 4.48 | 2.39 | 18 | 18 | 95.4 | 85.5 | 345.1 | 49.48 | 97.68 |
| Example 39 | 2.45 | 4.29 | 5 | 16 | 95.6 | 88.4 | 357.8 | 47.2 | 97.71 |
| Example 40 | 1.78 | 3.47 | 7 | 14 | 95.7 | 88 | 358.0 | 48.17 | 97.83 |

It can be learned from the comparison between Examples 31 and 32 and Example 23 that when C004/C110 of the negative electrode material falls within the range of 1 to 3, the lithium-ion battery has a lower resistance.

In Examples 33 and 34, $I_a/I_b$ of the negative electrode active substance falls within the range of 2 to 6, so the resistance DCR is also reduced to some extent compared with that in Example 26.

In Examples 35 and 36, the BET of the negative electrode active substance falls within the range of 4 m²/g to 10 m²/g, so the initial coulombic efficiency in these examples is improved, and the discharge rate performance is also improved to some extent.

In Examples 37 and 38, $D_v50$ of the negative electrode material falls within the range of 10 μm to 20 μm, so the discharge capacity retention rate in these examples is also increased to some extent compared with that in Example 26.

In Examples 39 and 40, the graphitization degree of the negative electrode material falls within the range of 94.5% to 96%, so the discharge capacity retention rate in these examples is also increased.

This indicates that the foregoing restrictions on the active substance can further improve the performance of the lithium-ion battery.

Although illustrative embodiments have been demonstrated and described, persons skilled in the art should understand that the foregoing embodiments should not be construed as any limitation on this application, and that some embodiments may be changed, replaced, and modified without departing from the spirit, principle, and scope of this application.

**Claims**

1. A negative electrode material, comprising a carbon-based material, wherein in a thermogravimetric test, the negative electrode material has an exothermic peak within a temperature range of 600°C to 800°C in an air atmosphere.

2. The negative electrode material according to claim 1, wherein the negative electrode material has an exothermic peak within a temperature range of 650°C to 750°C.

3. The negative electrode material according to claim 1, wherein in a Raman test, the negative electrode material satisfies $0.2 \leq Id/Ig \leq 0.5$, wherein Id is an intensity of a peak at 1350 cm$^{-1}$ in a Raman spectrum, and Ig is an intensity of a peak at 1580 cm$^{-1}$ in the Raman spectrum.

4. The negative electrode material according to claim 4, wherein $0.3 \leq Id/Ig \leq 0.5$.

5. The negative electrode material according to claim 1, wherein in a nitrogen adsorption and desorption test, the negative electrode material satisfies $0.002 \text{ cm}^3/\text{g} \leq S \leq 0.035 \text{ cm}^3/\text{g}$, wherein S is an adsorption volume of pores with a pore size of 3 nm to 35 nm in the negative electrode material.

6. The negative electrode material according to claim 1, wherein $0.004 \text{ cm}^3/\text{g} \leq S \leq 0.03 \text{ cm}^3/\text{g}$.

7. The negative electrode material according to claim 1, wherein the negative electrode material satisfies at least one of the following conditions (i) to (v):

    (i) in an X-ray diffraction test, a ratio of area C004 of a 004 crystal plane diffraction peak to area C110 of a 110 crystal plane diffraction peak of the negative electrode material satisfies $1 \leq C004/C110 \leq 6$;
    (ii) in an X-ray diffraction test, an X-ray diffraction pattern of the negative electrode material exhibits a diffraction peak a at $2\theta$ of 43° to 44° and a diffraction peak b at $2\theta$ of 45° to 47°, wherein a peak intensity of the diffraction peak a is $I_a$, and a peak intensity of the diffraction peak b is $I_b$, wherein $2 \leq I_a/I_b \leq 6$;
    (iii) a specific surface area of the negative electrode material is 4 cm$^2$/g to 20 cm$^2$/g;
    (iv) $D_v50$ of the negative electrode material satisfies $5 \text{ } \mu m \leq D_v50 \leq 25 \text{ } \mu m$; or
    (v) a graphitization degree of the negative electrode material is 94% to 96%.

8. The negative electrode material according to claim 1, wherein a raw material for preparing the carbon-based material comprises artificial graphite and/or natural graphite.

9. A secondary battery, comprising a negative electrode, wherein the negative electrode comprises a negative electrode current collector and a negative electrode active material layer disposed on at least one surface of the negative electrode current collector, wherein the negative electrode active material layer comprises the negative electrode material according to any one of claims 1 to 8.

10. An electronic apparatus, comprising the secondary battery according to claim 9.

FIG. 1

FIG. 2

## INTERNATIONAL SEARCH REPORT

| International application No. |
|---|
| **PCT/CN2022/123058** |

| **A.** | **CLASSIFICATION OF SUBJECT MATTER** |
|---|---|

H01M4/36(2006.01)i;H01M4/133(2010.01)i

According to International Patent Classification (IPC) or to both national classification and IPC

| **B.** | **FIELDS SEARCHED** |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

EN, CNABS, CNTXT, WOTXT, EPTXT, USTXT, CNKI, IEEE: 电池, 负极, 阳极, 碳, 炭, 石墨, 放热峰, DTA, cell, battery, anode, negative, carbon, graphite, exothermic peak

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | CN 113646920 A (MITSUBISHI CHEM CORP.) 12 November 2021 (2021-11-12) description, paragraphs 16-700 | 1-10 |
| X | CN 107528053 A (HITACHI CHEMICAL CO., LTD.) 29 December 2017 (2017-12-29) description, paragraphs 11-223 | 1-10 |
| X | CN 1237003 A (SAMSUNG DISPLAY DEVICES CO., LTD.) 01 December 1999 (1999-12-01) description, page 3, paragraph 1-page 20, paragraph 2 | 1-10 |
| X | CN 111819717 A (LG CHEMICAL LTD.) 23 October 2020 (2020-10-23) description, paragraphs 15-188 | 1-10 |
| A | CN 110612626 A (HITACHI CHEMICAL CO., LTD.) 24 December 2019 (2019-12-24) entire document | 1-10 |
| A | CN 101150210 A (SONY CORP.) 26 March 2008 (2008-03-26) entire document | 1-10 |
| A | CN 101030659 A (SONY CORP.) 05 September 2007 (2007-09-05) entire document | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 May 2023** | **19 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2022/123058** |

| Patent document cited in search report | | | Publication date (day/month/year) | Patent family member(s) | | | Publication date (day/month/year) |
|---|---|---|---|---|---|---|---|
| CN | 113646920 | A | 12 November 2021 | US | 2022013779 | A1 | 13 January 2022 |
| | | | | KR | 20210143796 | A | 29 November 2021 |
| | | | | EP | 3951926 | A1 | 09 February 2022 |
| | | | | EP | 3951926 | A4 | 13 July 2022 |
| | | | | JP | 2021061230 | A | 15 April 2021 |
| | | | | WO | 2020196914 | A1 | 01 October 2020 |
| CN | 107528053 | A | 29 December 2017 | EP | 3691001 | A1 | 05 August 2020 |
| | | | | US | 2013143127 | A1 | 06 June 2013 |
| | | | | US | 10854871 | B2 | 01 December 2020 |
| | | | | JP | 2016131159 | A | 21 July 2016 |
| | | | | JP | 6365580 | B2 | 01 August 2018 |
| | | | | WO | 2012015054 | A1 | 02 February 2012 |
| | | | | JPWO | 2012015054 | A1 | 12 September 2013 |
| | | | | JP | 6278596 | B2 | 14 February 2018 |
| | | | | TW | 201220583 | A | 16 May 2012 |
| | | | | TWI | 620372 | B | 01 April 2018 |
| | | | | KR | 20130101002 | A | 12 September 2013 |
| | | | | KR | 101921768 | B1 | 23 November 2018 |
| | | | | CA | 2807015 | A1 | 02 February 2012 |
| | | | | CA | 2807015 | C | 11 June 2019 |
| | | | | EP | 2600449 | A1 | 05 June 2013 |
| | | | | EP | 2600449 | A4 | 28 September 2016 |
| CN | 1237003 | A | 01 December 1999 | JPH | 11354122 | A | 24 December 1999 |
| | | | | JP | 4446510 | B2 | 07 April 2010 |
| | | | | US | 6482547 | B1 | 19 November 2002 |
| CN | 111819717 | A | 23 October 2020 | EP | 3754763 | A1 | 23 December 2020 |
| | | | | EP | 3754763 | A4 | 28 April 2021 |
| | | | | KR | 20190115834 | A | 14 October 2019 |
| | | | | KR | 102426797 | B1 | 29 July 2022 |
| | | | | WO | 2019194554 | A1 | 10 October 2019 |
| | | | | US | 2021126248 | A1 | 29 April 2021 |
| CN | 110612626 | A | 24 December 2019 | JP | 2020177931 | A | 29 October 2020 |
| | | | | JP | 6888722 | B2 | 16 June 2021 |
| | | | | WO | 2018207896 | A1 | 15 November 2018 |
| | | | | JPWO | 2018207896 | A1 | 14 May 2020 |
| | | | | JP | 6747588 | B2 | 26 August 2020 |
| | | | | US | 2021135220 | A1 | 06 May 2021 |
| | | | | US | 11605818 | B2 | 14 March 2023 |
| | | | | JP | 2020177932 | A | 29 October 2020 |
| | | | | JP | 6888723 | B2 | 16 June 2021 |
| | | | | TW | 201902014 | A | 01 January 2019 |
| | | | | TWI | 750373 | B | 21 December 2021 |
| | | | | JPWO | 2018207410 | A1 | 14 May 2020 |
| | | | | JP | 6747587 | B2 | 26 August 2020 |
| | | | | WO | 2018207333 | A1 | 15 November 2018 |
| | | | | WO | 2018207410 | A1 | 15 November 2018 |
| | | | | KR | 20190141172 | A | 23 December 2019 |
| | | | | TW | 201902013 | A | 01 January 2019 |
| | | | | TWI | 751332 | B | 01 January 2022 |

Form PCT/ISA/210 (patent family annex) (July 2022)

## INTERNATIONAL SEARCH REPORT
### Information on patent family members

International application No.

**PCT/CN2022/123058**

| Patent document cited in search report | | | Publication date (day/month/year) | Patent family member(s) | Publication date (day/month/year) |
|---|---|---|---|---|---|
| CN | 101150210 | A | 26 March 2008 | None | |
| CN | 101030659 | A | 05 September 2007 | None | |

Form PCT/ISA/210 (patent family annex) (July 2022)